Europäisches Patentamt

European Patent Office

Office européen des brevets

(11) Veröffentlichungsnummer: **0 320 751 B1**

(19)

(12) **EUROPÄISCHE PATENTSCHRIFT**

(45) Veröffentlichungstag der Patentschrift: **03.06.92**

(21) Anmeldenummer: **88120323.6**

(22) Anmeldetag: **06.12.88**

(51) Int. Cl.⁵: **B65D 85/04**, G11B 23/027

(54) **Sammelverpackung für auf Kerne gewickelte Magnetbänder.**

(30) Priorität: **16.12.87 DE 8716579 U**
**16.12.87 DE 8716580 U**
**08.03.88 DE 8803062 U**

(43) Veröffentlichungstag der Anmeldung:
**21.06.89 Patentblatt 89/25**

(45) Bekanntmachung des Hinweises auf die
Patenterteilung:
**03.06.92 Patentblatt 92/23**

(84) Benannte Vertragsstaaten:
**AT DE ES FR GB IT NL SE**

(56) Entgegenhaltungen:
**FR-A- 2 373 854**
**US-A- 4 162 031**

(73) Patentinhaber: **BASF Magnetics GmbH**
**Gottlieb-Daimler-Strasse 10**
**W-6800 Mannheim(DE)**

(72) Erfinder: **Thiele, Hartmut**
**Herterichstrasse 83**
**W-8000 München 71(DE)**
Erfinder: **Toral, José**
**Stiftsbogen 162**
**W-8000 München 70(DE)**

(74) Vertreter: **Münch, Volker et al**
**BASF Aktiengesellschaft Patentabteilung-C6**
**ZSP/A**
**W-6700 Ludwigshafen(DE)**

## Beschreibung

Die Erfindung bezieht sich auf eine Verpackung für mehrere auf flanschlose mit inneren Bohrungen versehene Wickelkerne aufgewickelte bandförmige Aufzeichnungsträger nach dem Oberbegriff des Anspruchs 1. Eine solche Verpackung ist aus der FR-A-2 373 854 bekannt.

Weltweit werden von den Magnetband-Fabriken sogenannte Rohwarenverpackungen verkauft. In diesen ist das Magnetband auf Kerne, beispielsweise flanschlose Wickelkerne (entweder die sogenannten NARTB-Kerne oder stapelbare Wickelkerne gemäß US-A-4 081 151 oder andere) aufgewikkelt. Diese Pancakes werden zur Zeit entweder einzeln verpackt oder in Sammelgebinden geschrumpft oder durch verschiedene Kartonagen gehalten.

Der Nachteil bei der Einzelverpackung besteht darin, daß ein großer Teil von Verpackungsmaterial eingesetzt werden muß.

Der Nachteil der oben geschilderten Sammelverpackung besteht darin, daß die Magnetbänder, obwohl die äußeren Lagen durch Styroporteller geschützt sind und außerdem die aufeinandergestapelten Pancakes durch eine Schrumpffolie verschlossen werden, doch das Bandmaterial nicht optimal geschützt ist.

Folgende Fehler können bei der Lagerung beziehungsweise beim Transport auftreten:

- Durch die geschrumpfte Verpackung stehen die äußeren Ränder unter Spannung und üben auf die in ihnen enthaltenen Magnetbänder einen Druck aus, so daß die Magnetbandwickel eine tellerförmige Verformung erleiden können.
- Bei liegendem Transport, das heißt, waagrecht liegendem Bandwickel beziehungsweise Wickelkern, können Stufenbildung beziehungsweise Wickelabrutscher entstehen und so das Magnetband beschädigen.
- Bei stehendem Transport, das heißt, senkrechtem Bandwickel beziehungsweise Wickelkern können bei gemeinsamen Transport unterschiedlicher Wickelkerne die Wickel gegeneinander verrutschen.
- Beim Kunden bestehen Handlings-Nachteile durch umständliches Öffnen der Verpackungen, Einsatz von Messer oder ähnlichem.
- Ein Teil der Verpackung wird beim Öffnen zerstört und kann nicht weiter verwendet werden.

Daher bestand die Aufgabe, eine Sammelverpackung zu finden, die nicht die oben genannten Nachteile aufweist sondern einen optimalen Schutz der Pancakes gewährleistet und die zudem einfach zu handhaben ist und preisgünstig herzustellen und zu verwenden ist sowie außerdem so gestaltet ist, daß alle Teile wiederverwendet werden können und kein Abfall mehr zwangsweise anfällt.

Erfindungsgemäß wurde die Aufgabe gelöst durch eine Verpackung der eingangs genannten gattungsmäßigen Art mit den kennzeichnenden Merkmalen des Anspruchs 1.

Durch zentrales Verspannen der Kerne konnte ein großer Teil der oben erwähnten Fehler verhindert werden. Durch Einsatz einer Kernstütze werden weitere Fehler vermieden. Dadurch ist erst ein Transport in stehender Version (die Kerne hängen auf der Achse) möglich. Weitere Einzelheiten der Erfindung gehen aus den Unteransprüchen, den Figuren und der Beschreibung hervor. Die Figuren zeigen im einzelnen:

Figur 1     Eine explosionsartige Darstellung einer erfindungsgemäßen Verpackung

Figur 2     eine andere erfindungsgemäße Ausführung in Explosionsdarstellung

Figur 3     einen Außenmantelschutz für eine Verpackung gemäß Figur 2

Figur 4     eine weitere erfindungsgemäße Ausführung in Explosionsdarstellung

Figur 5     eine Ausführung eines Griffendes von oben gesehen für eine Verpackung gemäß Figur 4.

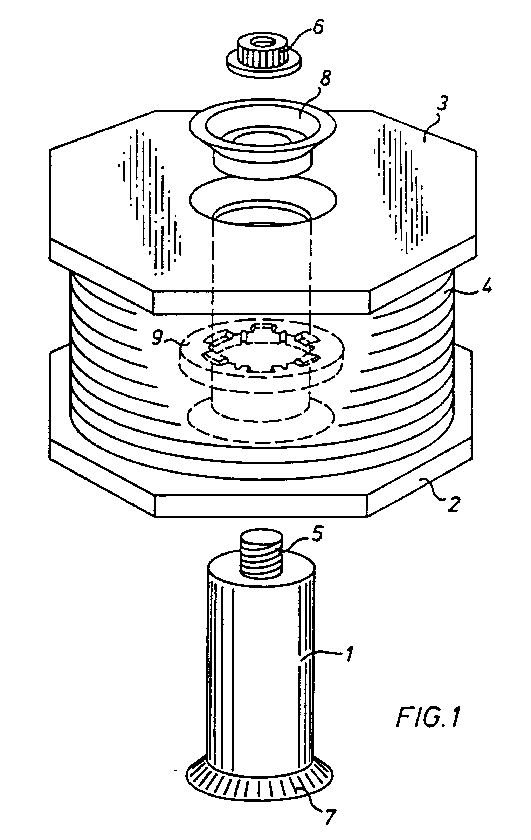

Die Erfindung wird nun anhand der Figur 1 näher erläutert, welche eine bevorzugte Ausführungsform darstellt. Aus der explosionsartigen Darstellung geht hervor, daß mehrere bandförmige Aufzeichnungsträger (4) (sogenannte Pancakes) auf flanschlose Wickelkerne jeder Art aufgespult sind. In der Figur ist ein Wickelkern (9) gemäß US-A-4 081 151 dargestellt.

Diese Wickelkerne ermöglichen einen besonders raum- und verpackungssparenden Transport von aufeinander gestapelten Pancakes. Diese Pancakes werden an beiden Endflächen von tellerförmigen Paletten (2, 3), bevorzugt aus Polystyrol, geschützt, wobei die Teller runde oder polygonale Außenkanten haben, wie beispielsweise aus der GB 1 576 973 bekannt, die der FR-A-2 373 854 entspricht.

Durch die inneren Bohrungen der Wickelkerne (9) und der Polystyrolteller (2, 3) ist die erfindungsgemäße Zentrierhülse (1) durchgesteckt, wobei der Durchmesser des zylindrischen Teils der Hülse dem Durchmesser der inneren Bohrungen entspricht. Die Basis (7) der Zentrierhülse ist bevorzugt kegelstumpfartig ausgebildet und enthält Rippen, welche ein Verdrehen der Zentrierhülse gegen die ebenfalls kegelförmige Bohrung des Tellers (2) verhindert. Auf der Oberseite enthält der Stützkern ein Gewinde (5), auf das eine Hutmutter (6) geschraubt wird. Zwischen Hutmutter und Teller (3) kann eine Beilagscheibe (8) zur Vermeidung des Verdrehens der Zentrierhülse gegen den Teller angeordnet sein. Die Dimensionen der Elemente (1, 5, 6, 8) sind so, daß bevorzugt die Verriegelungselemente und die Basis des Stützkerns die Tellerflächen (2, 3) eben abschließen, um Stapelfähigkeit der neuerungsgemäßen Sammelverpackung zu gewährleisten. Selbstverständlich sind auch Varianten der Zentrierhülse möglich, ohne den Geist der Erfindung zu verlassen:

- Die Zentrierhülse kann eine von ihrer Unterseite ausgehende innere Bohrung haben (Materialersparnis).
- Der Verschluß (6) kann über die Fläche (3) hinausragen, wenn bei der Zentrierhülse an der Unterseite eine entsprechend ausgeprägte innere Bohrung vorhanden ist, so daß auch bei dieser Ausführung Stapelfähigkeit gegeben ist.
- Die Elemente (5, 6) können statt Schraubgewinde auch einen Bajonettverschluß miteinander bilden.
- Die Zentrierhülse kann an ihren beiden Außenseiten symmetrisch ausgeführt sein, das heißt, an beiden Seiten ein Schraub- oder Bajonettgewinde haben, die mit entsprechenden Verschlußelementen verriegelbar sind.

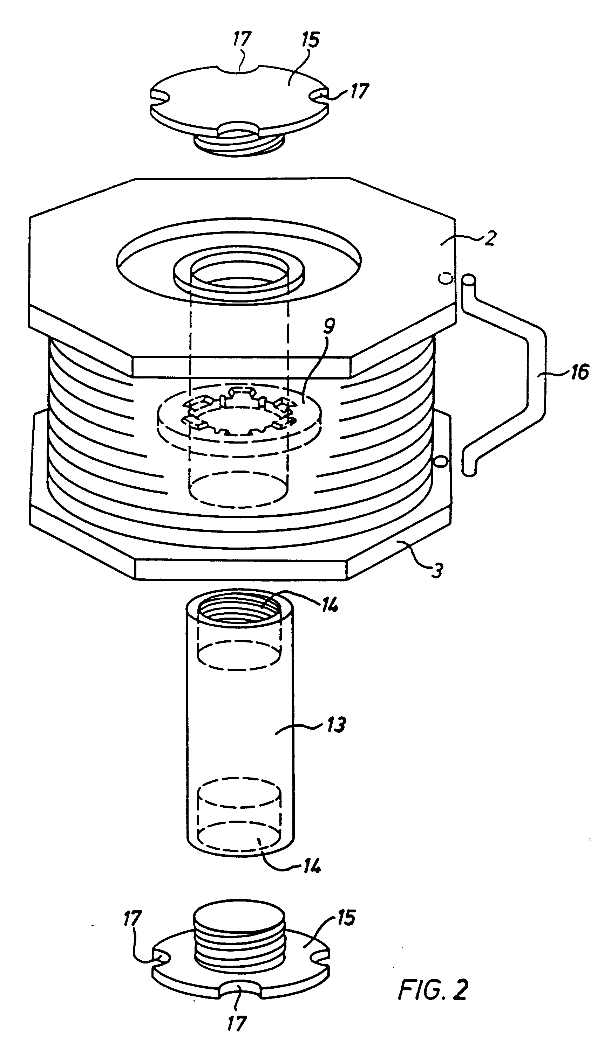

Eine andere ebenfalls bevorzugte Ausführung ist in Figur 2 dargestellt.

Durch die inneren Bohrungen der Wickelkerne (9) und der Kunststoff-Paletten (2, 3) ist die Zentrierhülse (13) durchgesteckt. In Bohrungen der Ober- und Unterseite enthält die Zentrierhülse jeweils ein Gewinde (14) in welches mit Griffmulden (17) ausgestattete Hutmuttern (15) geschraubt werden. Zwischen Hutmutter und Palette (3) kann eine nicht gezeichnete Beilagscheibe zur Vermeidung des Verdrehens der Zentrierhülse gegen die Palette angeordnet sein. Die Dimensionen der Elemente (13, 14, 15) sind so, daß bevorzugt die Verriegelungselemente und die Basis der Zentrierhülse die Palettenflächen (2, 3) eben abschließen, um Stapelfähigkeit der neuerungsgemäßen Sammelverpackung zu gewährleisten. In dafür vorgesehene Aussparungen an den Kunststoff-Paletten (2, 3) kann ein Tragegriff (16) eingehängt werden, um die Verpackungseinheit transportieren zu können.

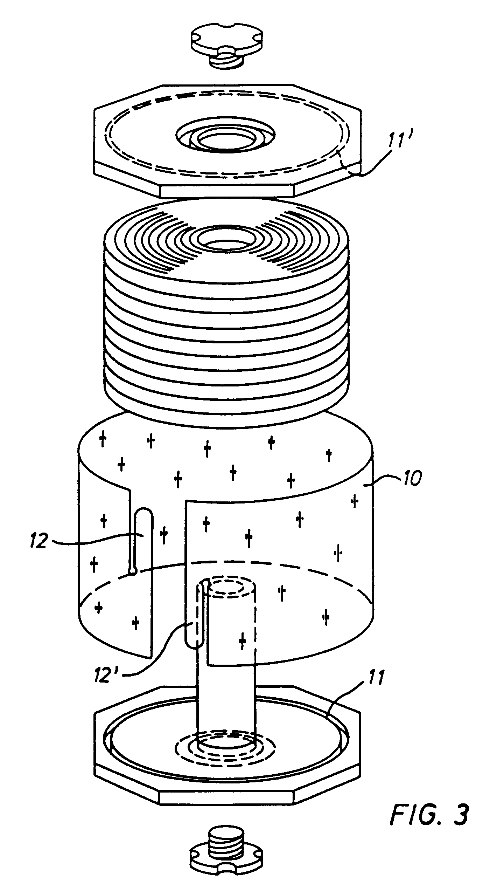

Figur 3 stellt ebenfalls in einer explosionsartigen Darstellung einen Außenmantelschutz für die Pancakes dar. Dieser besteht aus einer rechteckigen Folie (10) deren Schmalseiten durch Einhakelement (12, 12′) zusammensteckbar sind. Die Außenumfänge der Folie können in dafür vorgesehene kreisringförmige Naben (11, 11`), welche an der Innenseite der Paletten (2, 3) vorgesehen sind, beim Zusammensetzen der Verpackungseinheit eingesteckt werden.

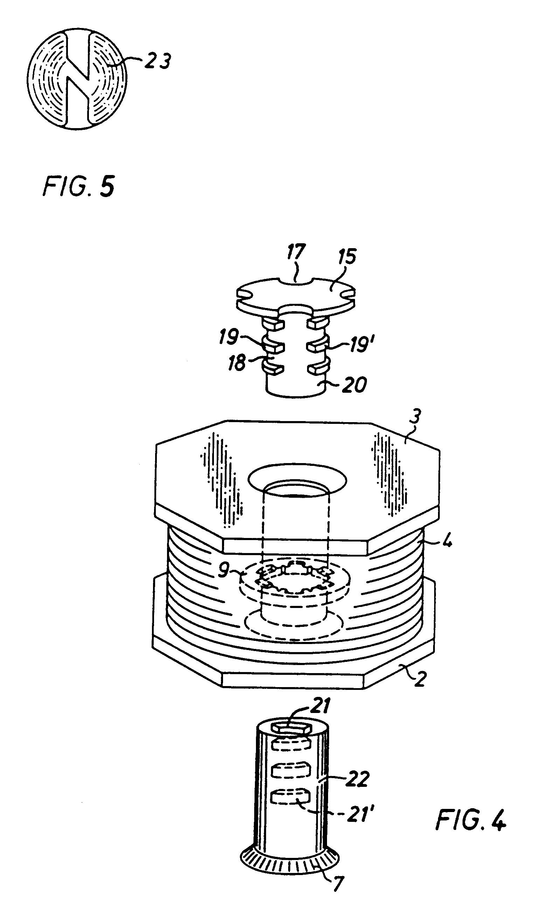

Eine weitere Ausführungsform der Erfindung stellt Figur 4 dar.

Durch die inneren Bohrungen der Wickelkerne (9) und der Kunststoff-Paletten (2, 3) sind zwei Zentrierhülsen (20, 22) durchsteckbar und, wie noch näher auszuführen, miteinander verriegelbar. Dabei entspricht der Außendurchmesser des zylindrischen Teils der Hülse (20) dem Durchmesser der inneren Bohrungen der Hülse (22). Durch Hineinstecken der zylindrisch ausgeführten Hülse (20) in die hohlzylindrische Hülse (22) sind beim Zusammenstecken der Verpackung beide Hülsen miteinander verriegelbar. Dazu besitzt die Hülse (22) in ihrem zylindrischen Innenumfang vorzugsweise zwei unter 180° gegeneinander versetzte gewindeartige übereinanderliegende Reihen von Erhöhungen (21, 21′), welche leicht schräg verlaufen und deren Kreisbogenlänge höchstens 90° beträgt. Komplementär dazu hat die zylindrische Hülse (20) an ihrer Außenfläche (18) entsprechende Erhöhungen (19, 19′) die mit den Erhöhungen (21, 21′) verriegelbar zusammenwirken. Dazu wird beim Zusammenstecken die Hülse (20) zweckmäßigerweise so eingesetzt, daß ihre Gewindeflächen an denen von Erhöhungen freien Flächen der Hülse (22) entlanggleiten und dann durch Drehen um 90° nach einer Richtung mit den Erhöhungen der Hülse (22) verriegelt werden. Durch den Schrägverlauf der Erhöhungen (21, 21′ 19, 19′) geschieht beim Verriegeln gleichzeitig ein Verspannen der Wickelkerne, so daß diese fixiert sind.

Zum leichteren Handling haben die Griffenden beider Hülsen (20, 22) zweckmäßigerweise Griffmulden (17), wie aus Figur 4 zu ersehen oder etwas anders gestaltete Griffmulden (23), wie in Figur 5 dargestellt.

Die Zentrierhülsen können extrusionsgeblasen, gespritzt oder gegossen hergestellt werden und können aus ABS, PP, oder einem anderen harten Kunststoff bestehen. Um ein einfaches Handling der erfindungsgemäßen Verpackung zu gewährleisten, können zwischen den Pancakes verschiedene Zwischenlagen aus geschäumtem Polystyrol oder aus geschäumten oder üblichen Kunststoffolien eingelegt werden. Dabei sind zweckmäßigerweise bei der Folienausführung Trageösen ausgebildet.

Insgesamt bietet die erfindungsgemäße Verpackung unter anderem folgende Vorteile:

- Der Verpackungsset kann stehend transportiert und gelagert werden, so daß, da die Pancakes auf der Zentrierhülse hängen, Wikkelabrutscher und Tellerbildung vermieden werden.
- Die Verpackung ist für sämtliche Kerne und Magnetbandbreiten geeignet.
- Die Verpackung braucht nicht durch Umhüllung mit Folien geschrumpft zu werden, so daß der Kunde beim Auspacken keine besonderen Hilfsmittel einsetzen muß.
- Die Verpackung kann beliebig oft geöffnet und geschlossen werden, sie ist also beim Endverbraucher sowohl im internen wie externen Transport einsetzbar.

- Durch diese Art von Verpackung fällt zwangsweise kein Abfall an.
- Durch eine eckige Ausbildung steht die Verpackung und kann dadurch auch problemlos in Großgebinden eingesetzt werden.
- Zur Handlingsvereinfachung können die Teile getrennt-farbig ausgebildet sein.
- Die Stützkerne können nach Verwendung mit den Wickelkernen problemlos an den Hersteller der Pancakes zurückgeschickt und dort erneut eingesetzt werden.

## Patentansprüche

1. Verpackung für mehrere auf flanschlose mit inneren Bohrungen versehene Wickelkerne aufgespulte bandförmige Aufzeichnungsträger (4), wobei die Verpackung tellerförmige Kunststoffpaletten (2, 3) beinhaltet, welche die äußeren Bandwickel schützt sowie ein in der Achsmitte hochgezogenes Fixierungsmittel, dessen Durchmesser dem lichten Innendurchmesser der Bohrungen der Wickelkerne und der Kunststoffteller entspricht, dadurch gekennzeichnet, daß das Fixierungsmittel eine Zentrierhülse (1, 13, 22) ist, welche durch die äußeren Wandungen der Kunststoffpaletten (2, 3) und durch die Innenbohrungen der Wickelkerne (9) durchsteckbar ist sowie ein erstes Verschlußelement aufweist, welches mit einem zweiten Verschlußelement verriegelbar und verspannbar zusammenwirkt und wobei die Zentrierhülse gegebenenfalls weitere Elemente (7, 8) aufweist, die ein Verdrehen der Zentrierhülse gegen die äußeren Wandungen der Kunststoffteller beim Schließen oder Öffnen der Verpackung verhindern.

2. Verpackung nach Anspruch 1, dadurch gekennzeichnet, daß das erste Verschlußelement (5) auf mindestens einer der beiden Endflächen der Zentrierhülse (1) angeordnet ist, wobei das erste Verschlußelement mit dem zweiten Verschlußelement (6) schnappbar zusammenwirkt.

3. Verpackung nach Anspruch 1, dadurch gekennzeichnet, daß die Zentrierhülse an einer Endfläche kegelstumpfförmig ausgeprägt und an der Kegelfläche mit Rillen (7) versehen ist.

4. Verpackung nach den Ansprüchen 1 bis 2, dadurch gekennzeichnet, daß sich zwischen Verriegelungselement (6) und Wandung (3) ein Beilagering (8) befindet.

5. Verpackung nach Anspruch 1, dadurch gekennzeichnet, daß die beiden Verschlußelemente dadurch ausgebildet werden, daß die Zentrierhülse (13) an beiden Endflächen innere mit Gewinde versehene Bohrungen (14) enthält, in die vorzugsweise mit Griffmulden (17) ausgestattete Hutmuttern (15) einschraubbar sind, und wobei der Außenumfang der Pancakes durch eine an den Enden zusammensteckbare Folie (10), welche in Nuten (11, 11') an der Innenseite der Paletten (2, 3) einsteckbar ist, umhüllbar ist.

6. Verpackung nach Anspruch 5, dadurch gekennzeichnet, daß in Aussparungen der Kunststoffpaletten (2, 3) ein Tragegriff (16) einsteckbar ist.

7. Verpackung nach Anspruch 1, dadurch gekennzeichnet, daß die Zentrierhülse aus zwei Hülsenteilen (20, 22) besteht, welche von beiden Seiten der Verpackung durch die äußeren Wandungen (2, 3) und durch die Innenbohrungen der Wickelkerne (9) durchsteckbar sind und durch Aufstecken des einen Hülsenteils (22), der das erste Verschlußelement darstellt, auf den anderen Hülsenteils (20), der das zweite Verschlußelement darstellt, miteinander verspannbar und verriegelbar zusammenwirken.

8. Verpackung nach Anspruch 7, dadurch gekennzeichnet, daß der andere Hülsenteil (20) ein Vollzylinder ist, auf deren Zylinderaußenfläche (18) vorzugsweise zwei um 180° gegeneinander versetzte gewindeartige Reihen von Erhöhungen (19, 19'), welche leicht schräg verlaufen und deren Kreisbogenlänge jeweils höchstens 90° beträgt, angeordnet sind, und daß der erste Hülsenteil (22) ein Hohlzylinder ist, dessen offenes Ende durch die Verpackung durchsteckbar ist und an dessen zylindrischer Innenfläche komplementär zu den Erhöhungen (19, 19') gleichartige Erhöhungen (21, 21') angeordnet sind.

9. Verpackung nach dem Anspruch 7 oder 8, dadurch gekennzeichnet, daß beide Hülsenteile an ihren Griffenden (15, 7) Griffmulden (17, 23) besitzen.

10. Verpackung nach den Ansprüchen 1 bis 9, dadurch gekennzeichnet, daß die Paletten (2, 3) aus Acrylnitril-Butadien-Styrol-Copolymerisat (ABS) oder aus geschäumtem Polystyrol bestehen, daß sich gegebenenfalls zwischen den Pancakes (4) Zwischenlagen aus geschäumtem Polystyrol oder Kunststoffolien befinden und daß die Zentrierhülse aus hartem Kunststoff wie beispielsweise ABS besteht.

## Claims

1. A pack for a plurality of recording media (4) in tape form wound up on flangeless hubs provided with inner bores, the pack comprising plate-shaped plastic pallets (2, 3), which protect the outer tape rolls, as well as a fixing means, which is raised in the axial center and the diameter of which corresponds to the clear inside diameter of the bores of the hubs and of the plastic plates, wherein the fixing means is a centering sleeve (1, 13, 22), which can be fitted through the outer walls of the plastic pallets (2, 3) and through the inner bores of the hubs (9) and has a first closure element, which interacts in a lockable and braceable manner with a second closure element, and the centering sleeve having, if appropriate, further elements (7, 8) which prevent twisting of the centering sleeve with respect to the outer walls of the plastic plates during closing or opening of the pack.

2. A pack as claimed in claim 1, wherein the first closure element (5) is arranged on at least one of the two end faces of the centering sleeve (1), the first closure element interacting in a snappable manner with the second closure element (6).

3. A pack as claimed in claim 1, wherein the centering sleeve is frustoconically shaped on one end face and is provided with grooves (7) on the conical face.

4. A pack as claimed in either claim 1 or claim 2, wherein there is a shim ring (8) between locking element (6) and wall (3).

5. A pack as claimed in claim 1, wherein the two closure elements are formed by the centering sleeve (13) containing on both end faces inner bores (14) which are provided with a thread, into which bores cap nuts (15), preferably provided with recessed grips (17), can be screwed, and the outer circumference of the pancakes being able to be wrapped in a film (10) which can be fitted together at the ends and can be fitted into slots (11, 11') on the inner side of the pallets (2, 3).

6. A pack as claimed in claim 5, wherein a carrying handle (16) can be fitted into clearances of the plastic pallets (2, 3).

7. A pack as claimed in claim 1, wherein the centering sleeve comprises two sleeve parts (20, 22), which can be fitted from both sides of the pack through the outer walls (2, 3) and through the inner bores of the hubs (9) and interact with each other in a braceable and lockable manner by fitting the one sleeve part (22), which represents the first closure element, onto the other sleeve part (20), which represents the second closure element.

8. A pack as claimed in claim 7, wherein the other sleeve part (20) is a solid cylinder, on the outer cylinder surface (18) of which there are arranged preferably two thread-like rows of elevations (19, 19'), which are mutually offset by 180°, run slightly obliquely and the arc length of which is in each case at most 90°, and wherein the first sleeve part (22) is a hollow cylinder, the open end of which can be fitted through the pack and on the cylindrical inside surface of which there are similar elevations (21, 21'), in a complementary way to the elevations (19, 19').

9. A pack as claimed in either claim 7 or claim 8, wherein both sleeve parts have recessed grips (17, 23) at their gripping ends (15, 7).

10. A pack as claimed in any of claims 1 to 9, wherein the pallets (2, 3) consist of acrylonitrilebutadiene-styrene copolymer (ABS) or of expanded polystyrene, wherein there are, if appropriate, intermediate liners of expanded polystyrene or plastic films between the pancakes (4) and wherein the centering sleeve consists of rigid plastic, such as for example ABS.

## Revendications

1. Emballage pour plusieurs supports d'enregistrement en forme de bande (4) enroulés sur des noyaux sans flasques pourvus de trous intérieurs, cet emballage comportant des palettes en matière plastique en forme de plateau (2,3) qui protègent les enroulements de bande extérieurs, et un moyen de fixation s'élevant dans l'axe, dont le diamètre correspond au diamètre intérieur des trous des noyaux d'enroulement et des plateaux en matière plastique, caractérisé par le fait que le moyen de fixation est une douille de centrage (1,13,22) qu'on peut faire passer à travers les parois extérieures des palettes en matière plastique (2,3) et à travers les trous intérieurs des noyaux d'enroulement (9) et qui présente un premier élément de fermeture qui coopère avec un deuxième élément de fermeture pour produire verrouillage et serrage, la douille de centrage présentant éventuellement d'autres éléments (7,8) qui l'empêchent de tourner par rapport aux parois extérieures des plateaux en matière plastique à la fermeture ou l'ouverture de l'emballage.

2. Emballage selon la revendication 1, caractérisé par le fait que le premier élément de fermeture (5) est placé sur au moins une des deux faces d'extrémité de la douille de centrage (1) et coopère par déclic avec le deuxième élément de fermeture (6).

3. Emballage selon la revendication 1, caractérisé par le fait que la douille de centrage reçoit par estampage une forme de tronc de cône à une face d'extrémité et est pourvue de rainures (7) sur la surface conique.

4. Emballage selon les revendications 1 et 2, caractérisé par le fait qu'entre l'élément de verrouillage (6) et la paroi (3) se trouve une rondelle (8).

5. Emballage selon la revendication 1, caractérisé par le fait que la réalisation des deux éléments de fermeture résulte de ce que la douille de centrage (13) présente à ses deux faces d'extrémité des trous intérieurs (14) pourvus d'un filetage dans lesquels peuvent être vissés des écrous à chapeau (15) de préférence pourvus de creux de saisie (17), le pourtour extérieur des supports d'enregistrement pouvant être enveloppé par une feuille (10) pouvant être jointe à elle-même à ses extrémités qui peut être engagée dans des rainures (11,11') faites sur la face intérieure des palettes (2,3).

6. Emballage selon la revendication 5, caractérisé par le fait qu'une poignée de transport (16) peut être engagée dans des évidements des palettes en matière plastique (2,3).

7. Emballage selon la revendication 1, caractérisé par le fait que la douille de centrage est constituée de deux parties (20,22) qu'on peut faire passer depuis les deux côtés de l'emballage à travers les parois extérieures (2,3) et à travers les trous intérieurs des noyaux d'enroulement (9) et qui coopèrent de façon à produire serrage et verrouillage par application d'une partie (22), qui constitue le premier élément de fermeture, sur l'autre partie (20), qui constitue le deuxième élément de fermeture.

8. Emballage selon la revendication 7, caractérisé par le fait que l'autre partie (20) de la douille de centrage est un cylindre plein sur la surface latérale (18) duquel sont faites de préférence deux rangées d'élévations du genre filetage décalées de 180 degrés (19,19') qui s'étendent légèrement obliquement et ont chacune une longueur d'arc d'au plus 90 degrés, et que la première partie (22) de la douille de centrage est un cylindre creux dont on peut faire passer l'extrémité ouverte à travers l'emballage et sur la face intérieure cylindrique duquel sont faites, complémentairement aux élévations (19,19'), des élévations du même genre (21,21').

9. Emballage selon l'une des revendications 7 et 8, caractérisé par le fait que les deux parties de la douille de centrage ont à leurs extrémités de saisie (15,7) des creux de saisie (17,23).

10. Emballage selon les revendications 1 à 9, caractérisé par le fait que les palettes (2,3) sont en copolymère acrylonitrile-butadiène-styrène (ABS) ou en polystyrène expansé, qu'entre les supports d'enregistrement (4) se trouvent éventuellement des couches intermédiaires de polystyrène expansé ou des feuilles de matière plastique et que la douille de centrage est en matière plastique rigide comme par exemple l'ABS.

FIG.1

FIG. 2

FIG. 3

FIG. 5

FIG. 4